# EUROPÄISCHE PATENTSCHRIFT

(11) **EP 3 821 126 B1**
(45) Veröffentlichungstag und Bekanntmachung des Hinweises auf die Patenterteilung: **27.11.2024**
(21) Anmeldenummer: 19740354.6
(22) Anmeldetag: 12.07.2019
(51) Int. Cl.: F03D 7/02, F03D 7/04

(54) **VERFAHREN ZUM BETREIBEN EINER WINDENERGIEANLAGE UND STEUERUNG FÜR EINE WINDENERGIEANLAGE**
METHOD FOR OPERATING A WIND TURBINE AND CONTROLLER FOR A WIND TURBINE
PROCÉDÉ DE FONCTIONNEMENT D'UNE ÉOLIENNE ET SYSTÈME DE COMMANDE POUR UNE ÉOLIENNE

(30) Priorität: 13.07.2018 DE 102018005556
(43) Veröffentlichungstag der Anmeldung: 19.05.2021
(73) Patentinhaber: Siemens Gamesa Renewable Energy Service GmbH, 20097 Hamburg (DE)
(72) Erfinder: GEISLER, Jens, 24768 Rendsburg (DE)
(74) Vertreter: Glawe, Delfs, Moll
(86) Internationale Anmeldenummer: PCT/EP2019/068842
(87) Internationale Veröffentlichungsnummer: WO 2020/011986

(56) Entgegenhaltungen:
- WO-A1-2017/059862
- MULJADI E ET AL: "Understanding inertial and frequency response of wind power plants", POWER ELECTRONICS AND MACHINES IN WIND APPLICATIONS (PEMWA), 2012 IEEE, IEEE, 16 July 2012 (2012-07-16), pages 1 - 8, XP032245142, ISBN: 978-1-4673-1128-1, DOI: 10.1109/PEMWA.2012.6316361

## Beschreibung

Die Erfindung betrifft ein Verfahren zum Betreiben einer Windenergieanlage, bei dem ein prädiktiver Regler ausgehend von einem Systemzustand der Windenergieanlage eine Trajektorie für die Leistungsabgabe der Windenergieanlage berechnet. Die Leistungsabgabe der Windenergieanlage wird auf Basis eines Trajektoriewerts eingestellt. Die Erfindung betrifft außerdem eine Steuerung für eine Windenergieanlage.

Es ist bekannt, für die Steuerung einer Windenergieanlage einen prädiktiven Regler zu verwenden, WO 2016/023560A1, WO 2016/023561 A1. Prädiktive Regler werden im Allgemeinen so ausgelegt, dass die berechnete Trajektorie für die Leistungsabgabe dem erwarteten Zustand der Windenergieanlage möglichst gut entspricht. Ein Zustand, in dem die gemäß der Trajektorie abzugebende Leistung von der aus dem Wind zur Verfügung stehenden Leistung abweicht, ist unerwünscht und wird durch geeignete Berechnung der Trajektorie vermieden.

Die von einer Windenergieanlage erzeugte elektrische Energie wird üblicherweise in ein Übertragungsnetz eines Netzbetreibers eingespeist. Angestrebt wird im allgemeinen ein Betrieb des Übertragungsnetzes mit einer konstanten Netzfrequenz. Allerdings lässt die konstante Netzfrequenz sich bei einem Fehler in der Leistungsbilanz häufig nicht aufrechterhalten. Wird mehr Leistung in das Übertragungsnetz eingespeist, als die Verbraucher entnehmen, steigt die Netzfrequenz an. Entnehmen die Verbraucher mehr Leistung aus dem Übertragungsnetz, als eingespeist wird, sinkt die Netzfrequenz ab. Wünschenswert ist, dass die an das Übertragungsnetz angeschlossenen Windenergieanlagen einen Beitrag zur Stabilisierung der Frequenz leisten.

Generell besteht bei Windenergieanlagen die Möglichkeit, die Leistungsabgabe nach unten anzupassen. Durch geeignetes Verstellen des Anstellwinkels der Rotorblätter (Pitchwinkel) kann die Leistungsaufnahme aus dem Wind reduziert werden, womit eine entsprechende Verminderung der Leistungsabgabe einhergeht. Umgekehrt ist es im Allgemeinen nicht möglich, die Leistungsabgabe zu erhöhen, weil Windenergieanlagen in bestimmten Betriebsphasen bereits die optimale Leistung aus dem Wind aufnehmen. Dem kann abgeholfen werden, indem die Windenergieanlage im normalen Betrieb mit verminderter Leistung betrieben wird, so dass bei Bedarf jederzeit mehr Leistung abgerufen werden kann. Dies ist allerdings mit deutlichen Ertragseinbußen verbunden.

Eine kurzfristige Erhöhung der Leistungsabgabe ist außerdem möglich, indem dem Rotor kinetische Energie entzogen wird. Allerdings wird der Rotor damit in einen aerodynamisch ungünstigen Zustand gebracht, so dass die Windenergieanlage unmittelbar im Anschluss an die Entnahme der Überleistung nicht einmal mehr die normale Leistung einspeisen kann.

Der Erfindung liegt die Aufgabe zugrunde, ein Verfahren zum Betreiben einer Windenergieanlage sowie eine Steuerung vorzustellen, so dass die Windenergieanlage einen Beitrag zur Stabilisierung der Netzfrequenz leisten kann, ohne dass es zu größeren Ertragseinbußen kommt. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei dem erfindungsgemäßen Verfahren zum Betreiben einer Windenergieanlage berechnet ein prädiktiver Regler ausgehend von einem Systemzustand der Windenergieanlage eine Trajektorie für die Leistungsabgabe der Windenergieanlage für einen Vorhersagezeitraum. Die Leistungsabgabe der Windenergieanlage wird auf Basis eines Trajektoriewerts eingestellt wird. In einer ersten Variante des Verfahrens umfasst die Trajektorie einen Abschnitt, in dem die Trajektoriewerte einer Überleistung gegenüber Normalleistung entsprechen, und einen Abschnitt, in dem die Trajektoriewerte einer Unterleistung gegenüber Normalleistung entsprechen. Die Überleistung und die Unterleistung addieren sich bis zum Ende des Vorhersagezeitraums zu Null. In einer zweiten Variante des Verfahrens umfasst die Trajektorie einen Abschnitt, in dem die Trajektoriewerte einer Überleistung gegenüber Normalleistung entsprechen, und/oder einen Abschnitt, in dem die Trajektoriewerte einer Unterleistung gegenüber Normalleistung entsprechen. Die Überleistung und die Unterleistung addieren sich bis zum Ende des Vorhersagezeitraums zu Null, wobei bei der Addition von Überleistung und Unterleistung ein bis zum Beginn des Vorhersagezeitraums aufgelaufener Leistungsüberschuss/-defizit berücksichtigt wird.

Die Erfindung hat erkannt, dass es mit einem zunehmenden Anteil von Windenergieanlagen, die an ein Übertragungsnetz angeschlossen sind, schwieriger wird, die Netzfrequenz im Übertragungsnetz stabil zu halten. Früher wurde die Grundlast zu einem großen Teil durch Synchrongeneratoren bereitgestellt. Synchrongeneratoren haben eine selbststabilisierende Wirkung auf die Netzfrequenz, indem sie automatisch mehr Leistung einspeisen, wenn die Netzfrequenz absinkt, und weniger Leistung einspeisen, wenn die Netzfrequenz ansteigt. Eine solche selbststabilisierende Wirkung auf das Netz haben Windenergieanlagen nicht. Eine entsprechende stabilisierende Wirkung lässt sich auch durch Programmieren der Windenergieanlage nicht ohne weiteres erreichen, weil die aus dem Wind aufgenommene Energie nicht zu jedem Zeitpunkt erhöht werden kann.

Mit der Erfindung wird vorgeschlagen, eine in die Zukunft gerichtete Trajektorie für die Leistungsabgabe so zu berechnen, dass in dem Vorhersagezeitraum Überleistung und/oder Unterleistung abgegeben wird. Die Abweichung von der Normalleistung kann genutzt werden, um ähnlich einem Synchrongenerator einen Beitrag zur Stabilisierung der Netzfrequenz zu leisten. Ein wesentliches Element der Erfindung liegt darin, nicht nur eine Abweichung von der Normalleistung zum Zwecke der Frequenzstabilisierung zuzulassen, sondern zugleich einen Weg zu berechnen, mit dem die Windenergieanlage in einen regulären Betriebszustand zurückgeführt werden kann. Dies geschieht dadurch, dass die Leistungsbilanz bis zum Ende des Vorhersagezeitraums ausgeglichen wird, indem die Überleistung und die Unterleistung sich zu Null addieren. Es können also für die Netzstabilisierung günstige Variationen der Abgabeleistung vorgenommen werden und gleichzeitig die Ausgeglichenheit der Leistungsbilanz sichergestellt werden.

Durch eine kontinuierliche, "fließende" Anwendung des vorgeschlagenen Verfahrens, ist es möglich, die zur Netzstabilisierung notwendigen, kontinuierlichen leichten Variationen der Abgabeleistung anzubieten und gleichzeitig eine im Durchschnitt ausgeglichene Leistungsbilanz zu halten. Die ausgeglichene Leistungsbilanz ist wichtig, da andernfalls die Abgabe von Unterleistung zu Ertragseinbußen und damit zu Einnahmeausfällen führen würde bzw. die Abgabe von Überleistung dauerhaft entweder zu einer Überlastung des elektrischen Systems oder zum Abwürgen des Rotors führt. Damit kann die Wirkung des erfindungsgemäßen Verfahrens auch so verstanden werden, dass die ohnehin vorhanden Schwankungen der von Windenergieanlagen abgegebenen Leistung gezielt so geplant werden, dass die zur Stabilisierung des Netzes beitragen.

Eine Windenergieanlage wird im Normalbetrieb üblicherweise so gesteuert, dass die erzeugte elektrische Leistung der aus dem Wind aufgenommenen Leistung entspricht. Die Abweichungen zwischen der aus dem Wind aufgenommenen Leistung und der erzeugten elektrischen Leistung werden allgemein so gering wie möglich gehalten, um zu vermeiden, dass der Rotor sich beschleunigt oder abgebremst wird. Die Leistung, die eine Windenergieanlage im Normalbetrieb abgibt, wird als Normalleistung bezeichnet.

Die Normalleistung ist die Leistung, die die Windenergieanlage abgeben würde, wenn sie keine Überleistung oder Unterleistung abgeben soll. Sie ergibt sich aus der vom Wind dargebotenen Leistung und den Randbedingungen, die beeinflussen, wie optimal die Windenergieanlage dieses Angebot in elektrische Energie umwandeln kann. Im Normalbetrieb wird die Windenergieanlage so betrieben, dass sie die aus dem Wind aufgenommene Leistung unmittelbar und optimal in elektrische Energie umsetzt. Unmittelbar bedeutet, dass auf eine Zwischenspeicherung der Energie (zum Beispiel als kinetische Energie des Rotors, als Wärmeenergie, als elektrische Energie im Zwischenkreis des Umrichters oder in mit der Anlage gekoppelten elektrischen Kurzzeitspeichern) verzichtet wird. Ein Betriebszustand, in dem Energie zwischengespeichert wird, kann allgemein nur für begrenzte Zeit fortgesetzt werden, weil die Kapazität der zur Verfügung stehenden Speicher begrenzt ist. Im Unterschied dazu kann die Windenergieanlage im Normalbetrieb beliebig lange betrieben werden.

Um die in die Zukunft gerichtete Trajektorie mit einer Normalleistung vergleichen zu können, ist eine Prognose für die Normalleistung über den Vorhersagezeitraum erforderlich. Ein notwendiges Element der Prognose ist der Betriebszustand der Windenergieanlage am Ende des Vorhersagezeitraums, weil anhand dieses Betriebszustands die Leistungsbilanz bis zum Ende des Vorhersagezeitraums ausgeglichen wird. Möglich ist auch, die Normalleistung für einen oder mehrere Zeitpunkte innerhalb des Vorhersagezeitraums zu prognostizieren.

In einem einfachen Fall kann die Prognose der Normalleistung darin bestehen, dass die aktuelle Normalleistung für die Dauer des Vorhersagezeitraums fortgeschrieben wird. Möglich ist auch eine Prognose anhand einfacher Annahmen über in dem Vorhersagezeitraum zu erwartende Änderungen. In einer Ausführungsform wird die Prognose für die Normalleistung aus einer Normal-Trajektorie abgeleitet, die auf vergleichbare Weise ermittelt wird wie die erfindungsgemäße Trajektorie. Im Unterschied zu der erfindungsgemäßen Trajektorie kann die Normal-Trajektorie unter der Annahme berechnet werden, dass während des gesamten Vorhersagezeitraums Normalleistung bereitgestellt wird.

Mit einem prädiktiven Regler wird ausgehend von einem Systemzustand zu einem aktuellen Zeitpunkt der Betriebszustand einer Windenergieanlage für einen zukünftigen Zeitraum geschätzt. Zu den Größen, die den Systemzustand der Windenergieanlage kennzeichnen, gehören die Betriebsparameter der Windenergieanlage und die Betriebsparameter des Anschlussnetzes.

Der prädiktive Regler kann so gestaltet sein, dass ausgehend von einem aktuellen Zeitpunkt T₀ eine Trajektorie berechnet wird, die sich über k Zeitpunkte (Abtastpunkte) in die Zukunft erstreckt. Dabei sollte die Zeitspanne (Intervall) zwischen jeweils zwei benachbarten Zeitpunkten Tₙ und Tₙ₊₁ so gewählt werden, dass innerhalb einer Rechenphase zwischen Tₙ und Tₙ₊₁ eine Trajektorie berechnet werden kann. Eine Trajektorie ist demnach eine Folge von Trajektoriewerten, die sich vom aktuellen Zeitpunkt T₀ bis zu einem zukünftigen Zeitpunkt T_{K} erstreckt. Die Zeitspanne zwischen den Zeitpunkten T₀ und T_{K} wird als Vorhersagezeitraum bezeichnet.

Der jeweils erste Trajektoriewert einer Trajektorie dient als Basis, um die betreffende Stellgrö-βe der Windenergieanlage in dem folgenden Intervall einzustellen.

Zu Beginn jedes neuen Intervalls stehen Daten über den tatsächlichen Systemzustand der Windenergieanlage im vorangegangenen Intervall zur Verfügung. Der prädiktive Regler erstellt in dem neuen Intervall eine weitere Trajektorie, die um ein Intervall nach hinten verschoben ist. Diese neue Trajektorie dient für das wiederum nachfolgende Intervall als Basis, um die Stellgröße der Windenergieanlage einzustellen. Der prädiktive Regler kann insbesondere als Modellprädiktive Regelung (Model Predictive Control, MPC, Receding Horizon Control) ausgestaltet sein.

Zu den Stellgrößen, auf die sich die Trajektorie beziehen kann, gehören das Drehmoment, welches dem Rotor durch das elektrische System entgegengesetzt wird, der Anstellwinkel eines oder mehrerer Rotorblätter (Pitchwinkel) und der Winkel, unter dem die Anlage zum Wind ausgerichtet ist (Azimutwinkel). Ebenfalls zu den Stellgrößen gehören von diesen Grö-βen abgeleitete Größen, wie beispielsweise die Leistung der Windenergieanlage. Eine Trajektorie kann sich auf eine Stellgröße, auf mehrere Stellgrößen oder auf den Verlauf von Zuständen (z.B. der Drehzahl oder der Turmkopfauslenkung) der Windenergieanlage beziehen. Im Rahmen der vorliegenden Erfindung wird der auf die Leistungsabgabe bezogene Trajektoriewert einer solchen Trajektorie betrachtet.

Ein Trajektoriewert ist ein Wert aus einer Folge von Trajektoriewerten, die gemeinsam die Trajektorie bilden. Wird eine Stellgröße der Windenergieanlage auf Basis des Trajektoriewerts eingestellt, so wird aus dem Trajektoriewert ein Sollwert und/oder ein Vorgabewert für die Stellgröße abgeleitet. Eine Ausführungsform, bei der der prädiktive Regler sowohl einen Sollwert als auch einen Vorsteuerwert liefert, ist als Zwei-Freiheitsgrade-Struktur bekannt.

Ein Vorgabewert kann unmittelbar in dem zugehörigen Stellglied der Windenergieanlage eingestellt werden oder einem Ausgangswert eines Reglers überlagert werden. Ein Sollwert kann einem unterlagerten Regler vorgegeben werden, der unter Berücksichtigung des Sollwerts und von Messwerten die Stellgröße regelt. Der Sollwert bzw. der Vorgabewert können aus einem einzelnen Trajektoriewert abgeleitet sein. Möglich ist auch, dass der Sollwert bzw. der Vorgabewert aus einer Mehrzahl von Trajektoriewerten oder aus einer Interpolation zwischen mehreren Trajektoriewerten abgeleitet sind.

Die Trajektorie kann einen ersten Abschnitt umfassen, in dem durch die Abweichung von der Normalleistung einer Abweichung der Netzfrequenz entgegengewirkt wird. Die Trajektorie kann einen zweiten Abschnitt umfassen, in dem eine in dem ersten Abschnitt aufgebaute Abweichung ausgeglichen wird. Bei der Berechnung der Trajektorie in dem zweiten Abschnitt kann berücksichtigt werden, dass die Windenergieanlage durch die Leistungsabgabe in dem ersten Abschnitt in einen aerodynamisch ungünstigen Zustand geraten sein kann.

Von Vorteil ist es, wenn der zweite Abschnitt zeitlich nachfolgend zu dem ersten Abschnitt ist. Es besteht dann die Möglichkeit, einer Frequenzänderung schnell entgegenzuwirken. Dass die Abweichung von der Normalleistung im zweiten Abschnitt nicht mehr unbedingt der Frequenzabweichung entgegenwirkt kann in Kauf genommen werden. Denn mit einer gewissen Vorlaufzeit muss das Netz ohnehin in der Lage sein, sich unabhängig von dem Beitrag der Windenergieanlagen zu stabilisieren. Denn der Beitrag der Windenergieanlagen kann beispielsweise auch durch einen Rückgang der Windstärke abnehmen.

Bei der Berechnung der Trajektorie kann eine Prognose für die Netzfrequenz berücksichtigt werden. Die Netzfrequenz-Prognose kann vom Betreiber des Übertragungsnetzes zur Verfügung gestellt werden. Möglich ist auch, dass die Netzfrequenz-Prognose aus Daten ermittelt wird, die lokal bei der Windenergieanlage oder dem Windpark vorliegen. Die Netzfrequenz-Prognose kann den gesamten Vorhersagezeitraum oder einen Teil des Vorhersagezeitraums umfassen. Vorzugsweise umfasst die Netzfrequenz-Prognose einen unmittelbar an den aktuellen Zeitpunkt anschließenden Zeitraum.

Aus der Netzfrequenz-Prognose kann eine Prognose für die abzugebende Leistung abgeleitet werden. Nimmt man an, dass sich bei Annahme einer über den Vorhersagezeitraum konstanten Netzfrequenz eine Normal-Trajektorie ergeben würde, so können Abweichungen der Netzfrequenz als Überleistung bzw. Unterleistung ausgedrückt werden. Um das Verhalten eines Synchrongenerators nachzubilden, kann die Trajektorie einen Abschnitt umfassen, in dem die Überleistung bzw. Unterleistung proportional zur Änderung der Frequenz ist. Zusätzlich oder alternativ dazu kann die Trajektorie einen Abschnitt umfassen, in dem die Überleistung bzw. Unterleistung proportional zur Frequenzabweichung ist.

Die aus der Netzfrequenz-Prognose abgeleitete Überleistung bzw. Unterleistung gibt an, welche Überleistung bzw. Unterleistung über den Vorhersagezeitraum wünschenswert wäre, um das Netz zu stabilisieren (Wunsch-Leistungsprognose). Es kann im Allgemeinen nicht davon ausgegangen werden, dass die Wunsch-Leistungsprognose dem entspricht, was die Windenergieanlage tatsächlich bereitstellen kann. Die erfindungsgemäße Trajektorie wird so berechnet, dass die wünschenswerte Überleistung bzw. Unterleistung in einem Umfang bereitgestellt wird, der den tatsächlichen Möglichkeiten der Windenergieanlage entspricht. Die Wunsch-Leistungsprognose kann innerhalb des erfindungsgemäßen Verfahrens aus der Netzfrequenz-Prognose abgeleitet werden. Möglich ist auch, dass die Wunsch-Leistungsprognose bereits zur Verfügung steht und in dem erfindungsgemäßen Verfahren als Eingangsgröße verwendet werden kann.

Bei der Ermittlung der erfindungsgemäßen Trajektorie können eine oder mehrere der folgenden Randbedingungen beachtet werden. Die Trajektorie kann so bestimmt werden, dass die Überleistung und die Unterleistung sich bis zum Ende des Vorhersagezeitraums zu Null addieren. Dies ist insbesondere dann von Vorteil, wenn die Windenergieanlage zu Beginn des Vorhersagezeitraums in einem ausgeglichenen Betriebszustand ist, so dass es keinen Leistungsüberschuss und kein Leistungsdefizit gibt, die sich in der Vergangenheit aufgebaut haben. Weiterhin kann der Leistungsüberschuss bzw. das Leistungsdefizit berücksichtigt werden, das sich aus den veränderten Betriebsbedingungen (z.B. dem aerodynamischen Leistungsbeiwert oder Verlustfaktoren) durch die Abweichung von der Normalleistung ergibt. Gibt es zu Beginn des Vorhersagezeitraums einen Leistungsüberschuss/-defizit (zum Beispiel weil die Windverhältnisse sich kurz zuvor überraschend geändert haben), so kann die Trajektorie so bestimmt werden, dass der anfängliche Leistungsüberschuss/-defizit, die Überleistung während des Vorhersagezeitraums und die Unterleistung während des Vorhersagezeitraums sich bis zum Ende des Vorhersagezeitraums zu Null addieren. Besteht zu Beginn des Vorhersagezeitraums ein Leistungsüberschuss oder ein Leistungsdefizit, so kann der Fall eintreten, dass während des gesamten Vorhersagezeitraums ausschließlich Überleistung oder ausschließlich Unterleistung abgegeben wird. Ist die Leistungsbilanz zu Beginn des Vorhersagezeitraums ausgeglichen, so definiert die Trajektorie in dem Vorhersagezeitraum wenigstens eine Phase mit Überleistung und wenigstens eine Phase mit Unterleistung.

Da sich die Leistungsbilanz auch in dem energetischen Zustand einer Anlage widerspiegelt, muss zur Bestimmung einer ausgeglichenen Bilanz, bei der die Überleistungen und die Unterleistungen sich bis zum Ende des Vorhersagezeitraums zu Null addieren, nicht unbedingt ein Vergleich mit der Normalleistung oder ein Aufrechnen von Überleistung und Unterleistung vorgenommen werden. Eine ausgeglichene Bilanz lässt sich z.B. auch am Zustand der Anlage am Ende der betrachteten Trajektorie feststellen. Die Trajektorie ist dann ausgeglichen, wenn alle energetischen Endzustände den gleichen Wert haben, als wenn eine Normal-Trajektorie gefahren worden wäre. Insbesondere können die Leistungsabgabe, der Blattwinkel, und die Drehzahl den Normalwerten entsprechen.

Gemäß einer weiteren Randbedingung kann die erfindungsgemäße Trajektorie am Ende des Vorhersagezeitraums mit der Normal-Trajektorie übereinstimmen. Die Trajektorie kann so ermittelt werden, dass die Differenz zwischen der Trajektorie und der Normal-Trajektorie über den gesamten Vorhersagezeitraum kleiner ist als ein vorgegebener erster Schwellwert. Die Trajektorie kann so ermittelt werden, dass die Steigung der Trajektorie nicht größer ist als ein vorgegebener zweiter Schwellwert. Die Trajektorie kann so ermittelt werden, dass die Abweichung zwischen der Trajektorie und der Wunsch-Leistungsprognose mit zunehmender Dauer des Vorhersagezeitraums größer werden kann. Beispielweise kann eine über den Vorhersagezeitraum abfallende exponentielle Gewichtung vorgesehen sein, die mit zunehmender Dauer des Vorhersagezeitraums größere Abweichungen zwischen der Trajektorie und der Wunsch-Leistungsprognose zulässt.

Die bei der Ermittlung der Trajektorie berücksichtigte Wunsch-Leistungsprognose kann sich über den gesamten Vorhersagezeitraum erstrecken. Die Trajektorie kann unter Anwendung einer Ausgleichskurve aus der Wunsch-Leistungsprognose abgeleitet werden. Die Ausgleichskurve kann so gestaltet sein, dass sie abschnittsweise oberhalb der Wunsch-Leistungsprognose und abschnittsweise unterhalb der Wunsch-Leistungsprognose verläuft. Insbesondere kann die Ausgleichskurve so bemessen sein, dass die Fläche, die oberhalb der Ausgleichskurve mit der Wunsch-Leistungsprognose eingeschlossen ist, genauso groß ist wie die Fläche, die unterhalb der Ausgleichskurve mit der Wunsch-Leistungsprognose eingeschlossen ist. Die Trajektorie kann als Differenz zwischen der Leistungsprognose und der Ausgleichskurve ermittelt werden. In einer Ausführungsform ist die Ausgleichskurve als Ausgleichsgerade ausgebildet.

Möglich ist auch eine Ausgleichskurve in Form einer Gegenkurve. Die Gegenkurve kann dadurch erzeugt werden, dass die Wunsch-Leistungsprognose an der Normal-Trajektorie gespiegelt ist und in umgekehrter Richtung verläuft. Die Trajektorie kann als lineare Überlagerung aus der Wunsch-Leistungsprognose und der Gegenkurve gebildet werden, so dass sich die Überleistung und die Unterleistung innerhalb des Vorhersagezeitraums ausgleichen.

In einer anderen Ausführungsform wird die Trajektorie anhand einer Wunsch-Leistungsprognose ermittelt, die sich nur über einen Teil des Vorhersagezeitraums erstreckt. Beispielsweise kann die Leistungsprognose für einen Abschnitt des Vorhersagezeitraums einen Verlauf der Überleistung bzw. Unterleistung definieren. Die Trajektorie kann in diesem Abschnitt mit der Wunsch-Leistungsprognose übereinstimmen. In dem verbleibenden Teil des Vorhersagezeitraums kann die Trajektorie so fortgesetzt werden, dass die Überleistung und die Unterleistung sich bis zum Ende des Vorhersagezeitraums ausgleichen und dass die Trajektorie am Ende des Übertragungshorizonts mit der Normal-Trajektorie zusammenfällt.

Möglich ist auch, dass die Wunsch-Leistungsprognose eine Steigung definiert, mit der die Überleistung bzw. Unterleistung ausgehend vom aktuellen Zeitpunkt ansteigt. Die Trajektorie kann anfänglich diese Steigung übernehmen. In einem späteren Abschnitt des Vorhersagezeitraums kann die Trajektorie so fortgesetzt werden, dass die Überleistung und die Unterleistung sich bis zum Ende des Vorhersagezeitraums ausgleichen und dass die Trajektorie am Ende des Vorhersagezeitraums mit der Normal-Trajektorie zusammenfällt.

Zusätzlich oder alternativ zu der Wunsch-Leistungsprognose kann bei der Ermittlung der Trajektorie eine Prognose über das Verhalten eines Umrichters berücksichtigt werden. Der Umrichter kann so gestaltet sein, dass er auf der Netzseite eine selbstständige Anpassung der Leistungsabgabe an die Bedürfnisse des Netzes vornimmt. Beispielsweise kann der Umrichter als virtuelle Synchronmaschine gestaltet sein, die die Leistungsabgabe in Abhängigkeit von der Netzfrequenz und/oder einer Änderungsrate der Netzfrequenz anpasst. Der Umrichter kann ein Vollumrichter sein, durch den die gesamte von der Windenergie erzeugte elektrische Leistung übertragen wird. Insbesondere kann die Zwischenkreisspannung des Umrichters bei der Ermittlung der Trajektorie berücksichtigt werden.

Die Erfindung betrifft auch eine Steuerung für eine Windenergieanlage. Die Steuerung umfasst einen prädiktiven Regler, der dazu ausgelegt ist, ausgehend von einem Systemzustand der Windenergieanlage eine Trajektorie für eine Stellgröße der Windenergieanlage für einen Vorhersagezeitraum zu berechnen. Die Steuerung ist dazu ausgelegt, ein Steuersignal zu erzeugen, um die Stellgröße der Windenergieanlage auf Basis eines Trajektoriewerts einzustellen. In einer ersten Variante umfasst wobei die Trajektorie einen Abschnitt, in dem die Trajektoriewerte einer Überleistung gegenüber Normalleistung entsprechen, und einen Abschnitt, in dem die Trajektoriewerte einer Unterleistung gegenüber Normalleistung entsprechen. Die Überleistung und die Unterleistung addieren sich bis zum Ende des Vorhersagezeitraums zu Null. In einer zweiten Variante umfasst die Trajektorie einen Abschnitt, in dem die Trajektoriewerte einer Überleistung gegenüber Normalleistung entsprechen, und/oder einen Abschnitt, in dem die Trajektoriewerte einer Unterleistung gegenüber Normalleistung entsprechen. Die Überleistung und die Unterleistung addieren sich bis zum Ende des Vorhersagezeitraums zu Null, wobei bei der Addition von Überleistung und Unterleistung ein bis zum Beginn des Vorhersagezeitraums aufgelaufener Leistungsüberschuss/-defizit berücksichtigt wird. Die Erfindung betrifft außerdem eine Windenergieanlage, die eine solche Steuerung umfasst und/oder die unter Kontrolle einer solchen Steuerung betrieben wird.

Die Steuerung kann mit weiteren Merkmalen fortgebildet werden, die im Zusammenhang des erfindungsgemäßen Verfahrens beschrieben sind. Das Verfahren kann mit weiteren Merkmalen fortgebildet werden, die im Zusammenhang der erfindungsgemäßen Steuerung beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung einer erfindungsgemäßen Windenergieanlage;
- Fig. 2:: eine Steuerung einer Windenergieanlage bei einer ersten Ausführungsform der Erfindung;
- Fig. 3:: die Ansicht gemäß Fig. 2 bei einer anderen Ausführungsform der Erfindung;
- Fig. 4:: eine Normal-Trajektorie der Windenergieanlage;
- Fig. 5:: eine schematische Darstellung von Schritten zur Ermittlung einer erfindungsgemäßen Trajektorie;
- Fig. 6 bis 10:: die Ermittlung der Trajektorie bei alternativen Ausführungsformen der Erfindung.

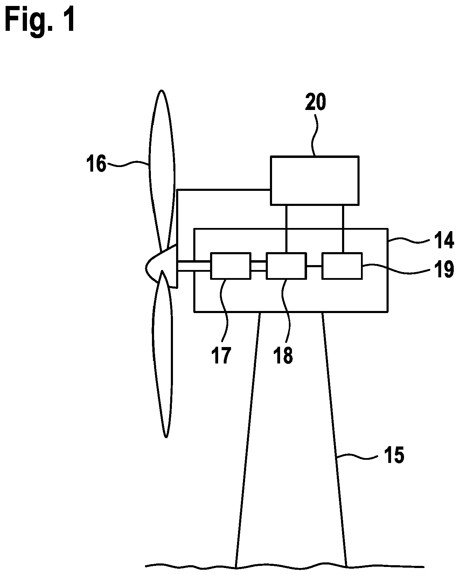

Bei einer in Fig. 1 gezeigten Windenergieanlage ist eine Gondel 14 drehbar auf einem Turm 15 gelagert. Die Gondel trägt einen Rotor 16, der durch den Wind in Drehung versetzt wird. Der Rotor ist über ein Getriebe 17 an einen Generator 18 angeschlossen, der bei einer Drehung des Rotors 16 elektrische Energie erzeugt. Über einen Umrichter 19 wird die elektrische Energie in ein in Fig. 1 nicht dargestelltes Anschlussnetz eingespeist.

Eine Steuerung 20 macht Vorgaben für den Betrieb der Windenergieanlage. Die Vorgaben betreffen Stellgrößen der Windenergieanlage, zu denen insbesondere der Pitchwinkel der Rotorblätter sowie die Einstellungen des Generators 18 und des Umrichters 19 gehören. Der Generator 18 und der Umrichter 19 bilden gemeinsam ein elektrisches System, das dem Rotor ein Drehmoment entgegensetzt.

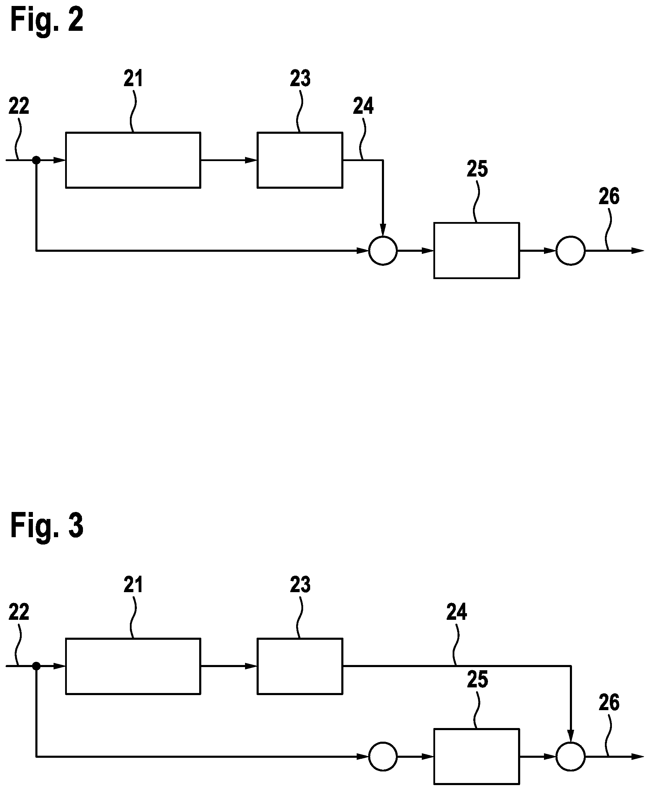

Die Steuerung 20 umfasst gemäß Fig. 2 einen Zustandsschätzer 21, der ausgehend von Messwerten 22 den Systemzustand der Windenergieanlage ermittelt. Einige Parameter, die den Systemzustand der Windenergieanlage kennzeichnen, sind einer direkten Messung zugänglich. Andere Parameter werden anhand der zugänglichen Messwerte geschätzt.

Die Information über den Systemzustand wird einem prädiktiven Regler 23 zugeführt, der ausgehend vom aktuellen Systemzustand eine in die Zukunft gerichtete Trajektorie für die Stellgrößen der Windenergieanlage berechnet. Die Trajektorie gibt einen Verlauf der Stellgrößen an, der anhand eines in dem prädiktiven Regler 23 hinterlegten Zustandsmodells der Windenergieanlage und unter Berücksichtigung eines bestimmten Gütekriteriums ein optimales Ergebnis liefert.

Ein Trajektoriewert 24 wird den Eingang eines unterlagerten Reglers 25 als Sollwert zugeführt. Der unterlagerte Regler 25 verarbeitet den Trajektoriewert 24 sowie die Messwerte 22 und ermittelt daraus eine Vorgabe 26 für den Pitchwinkel der Rotorblätter und die Einstellungen des elektrischen Systems 18, 19. Über Stellglieder werden die betreffenden Parameter der Windenergieanlage gemäß den Vorgaben 26 des unterlagerten Reglers 25 eingestellt.

Bei der alternativen Ausführungsform gemäß Fig. 3 wird der Trajektoriewert 24 im Wege einer Vorsteuerung dem Ausgangssignal des unterlagerten Reglers 25 überlagert. Bei einer weiteren Alternative liefert der prädiktive Regler sowohl einen Sollwert als auch einen Vorsteuerwert (Zwei-Freiheitsgrade-Struktur).

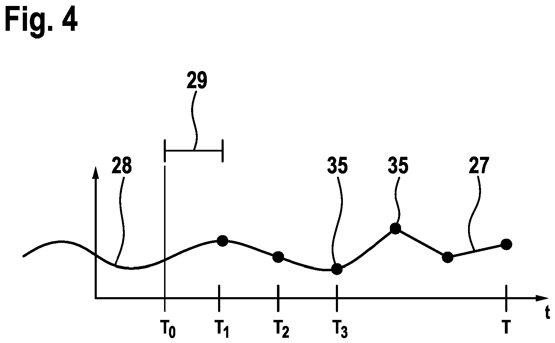

In Fig. 4 ist eine über der Zeit t aufgetragene Normal-Trajektorie 27 für die von der Windenergieanlage erzeugte elektrische Leistung aufgetragen, die der prädiktive Regler 23 berechnet hat. Bis zu einem Zeitpunkt T₀ liegen Messwerte über den tatsächlichen Verlauf 28 der elektrischen Leistung der Windenergieanlage vor. Zum Zeitpunkt T₀ beginnt eine Rechenphase 29, die sich bis zu einem Zeitpunkt T₁ erstreckt. In einem ersten Abschnitt der Rechenphase 29 schätzt der Zustandsschätzer 21 einen Systemzustandsvektor, der dem prädiktiven Regler 21 zugeführt wird. Im zweiten Abschnitt der Rechenphase 29 berechnet der prädiktive Regler 23 ausgehend von dem Systemzustandsvektor die Normal-Trajektorie 27, die sich von dem Zeitpunkt T₁ bis zu einem zukünftigen Zeitpunkt T_{K} erstreckt. Die Zeitspanne zwischen den Zeitpunkten T₁ und T_{K} wird als Vorhersagezeitraum bezeichnet. Bei der Berechnung der Normal-Trajektorie 27 wird eine Windprognose berücksichtigt, die sich über den Vorhersagezeitraum erstreckt.

Die Normal-Trajektorie 27 ist zusammengesetzt aus Abtastpunkten 35, wobei der zeitliche Abstand zweier benachbarter Abtastpunkte 35 wenigstens so groß ist wie die Länge der Rechenphase 29. Zwischen zwei benachbarten Abtastpunkten 35 wird die Trajektorie 27 jeweils linear interpoliert. Insgesamt kann die Trajektorie 27 sich beispielsweise über 200 Intervalle in die Zukunft erstrecken.

Zum Zeitpunkt T₁ ist die Berechnung der Trajektorie 27, die sich vom Zeitpunkt T₁ bis zum Zeitpunkt T_{K} erstreckt, beendet. Der unterlagerte Regler 25 regelt zwischen den Zeitpunkten T₁ und T₂ anhand des Verlaufs der Trajektorie 27 zwischen den Zeitpunkten T₁ und T₂.

Der weitere Verlauf der Trajektorie 27 nach dem Zeitpunkt T₂ hat keinen Einfluss auf die Stellgrößen der Windenergieanlage. Zum Zeitpunkt T₁ liegen Messwerte aus dem Intervall zwischen T₀ und T₁ vor. Auf Basis dieser Messwerte wird im Intervall zwischen T₁ und T₂ eine neue Trajektorie berechnet, die zwischen den Zeitpunkten T₂ und T₃ den Verlauf der Stellgröße vorgibt.

Mit der Normal-Trajektorie 27 berechnet der prädiktive Regler 23 einen aus der Perspektive der Windenergieanlage optimalen Verlauf für die Leistungsabgabe während des Vorhersagezeitraums. Ein in diesem Sinne optimaler Verlauf bedeutet insbesondere, dass die elektrische Leistungserzeugung möglichst gut in Einklang gebracht wird mit der aus dem Wind aufgenommenen Leistung.

Bei dem erfindungsgemäßen Verfahren wird eine von der Normal-Trajektorie abweichende Trajektorie berechnet, bei der innerhalb des Übertragungshorizonts abweichend von der Normal-Trajektorie und unter Berücksichtigung einer ausgeglichenen Leistungsbilanz phasenweise Überleistung und/oder Unterleistung abgegeben wird.

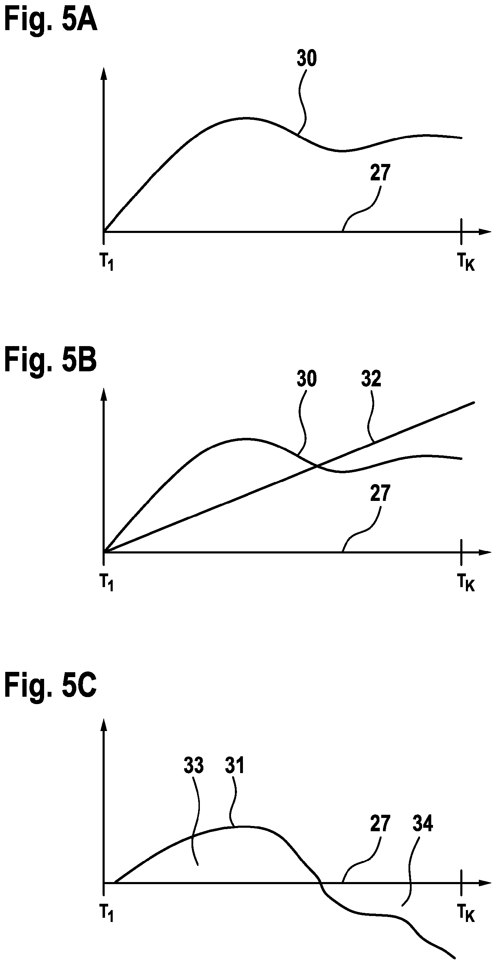

In Fig. 5 fällt die horizontale Achse mit der Leistung zusammen, die die Windenergieanlage innerhalb des Übertragungshorizonts gemäß der Normal-Trajektorie 27 abgeben würde. Beispielsweise von dem Übertragungsnetz erhält der prädiktive Regler 23 eine Wunsch-Leistungsprognose 30 für den Vorhersagezeitraum, siehe Fig. 5A. Die Wunsch-Leistungsprognose 23 weicht nach oben von der Normal-Trajektorie 27 ab, so dass die Windenergieanlage während des gesamten Vorhersagezeitraums Überleistung abgeben müsste, um die Wunsch-Leistungsprognose 30 zu erfüllen. Dies ist nicht möglich, da die Windenergieanlage bereits gemäß der Normal-Trajektorie 27 die gesamte aus dem Wind aufgenommene Energie in elektrische Leistung umwandelt.

Es ist das Ziel des erfindungsgemäßen Verfahrens, eine Trajektorien 31 zu ermitteln, in der die Wunsch-Leistungsprognose 30 wenigstens teilweise berücksichtigt ist. In dem Ausführungsbeispiel der Fig. 5 wird dazu zunächst eine Ausgleichsgerade 32 durch die Wunsch-Leistungsprognose 30 gelegt, so dass die Flächen gleich groß sind, die oberhalb und unterhalb der Ausgleichsgerade 32 mit der Wunsch-Leistungsprognose 30 eingeschlossen sind. Bei der Bestimmung des Ausgleichs kann insbesondere auch die Minderleistung berücksichtigt werden, die sich aus dem aerodynamisch ineffizienteren Betrieb bei Abweichung von der Normal-Trajektorie ergibt.

Die in Fig. 5C dargestellte erfindungsgemäße Trajektorie 31 wird ermittelt, indem für jeden Zeitpunkt innerhalb des Vorhersagezeitraums die Differenz zwischen der Wunsch-Leistungsprognose 30 und der Ausgleichsgeraden 32 zu der Normal-Trajektorie 27 addiert wird. In Abschnitten, in denen die Wunsch-Leistungsprognose 30 größer ist als die Ausgleichsgerade 32, definiert die Trajektorie 31 eine Überleistung 33 verglichen mit der Normal-Trajektorie 27. In Abschnitten, in denen die Wunsch-Leistungsprognose 30 kleiner ist als die Ausgleichsgerade 32, definiert die Trajektorie 31 eine Unterleistung 34 verglichen mit der Normal-Trajektorie 27.

Die Menge an Überleistung 33 während des Vorhersagezeitraums ist genauso groß wie die Menge an Unterleistung 34. Damit entspricht die elektrische Leistung, die gemäß der Trajektorie 31 während des Vorhersagezeitraums erzeugt wird, der gemäß der Normal-Trajektorie 27 vorgesehenen Leistung.

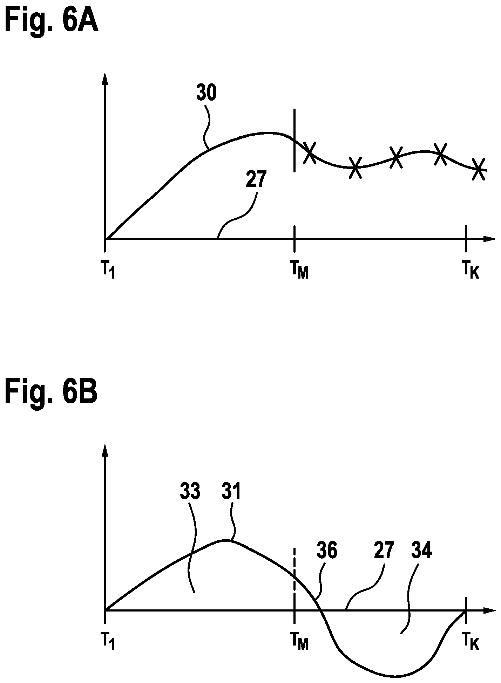

In dem alternativen Ausführungsbeispiel gemäß Fig. 6 wird nur der erste Abschnitt zwischen den Zeitpunkten T₁ und T_{M} der Wunsch-Leistungsprognose 30 bei der Ermittlung der Trajektorie 31 berücksichtigt, indem dieser Abschnitt identisch in die Trajektorie 31 übernommen wird. Der zweite Abschnitt des Übertragungszeitraums zwischen den Zeitpunkten T_{M} und T_{K} wird genutzt, um die Windenergieanlage zurück zu einem normalen Betriebszustand zu führen. Die Trajektorie 31 wird dazu mit einem Kurvenabschnitt 36 vervollständigt, der glatt an den ersten Abschnitt anschließt, der die Überleistung 33 durch eine entsprechende Menge an Unterleistung 34 ausgleicht und der am Ende des Übertragungshorizonts zum Zeitpunkt T_{K} wieder mit der Normal-Trajektorie 27 übereinstimmt und glatt in diese übergeht. Es kann eine Kurvenform definiert werden, die diesen Kriterien genügt und die lediglich skaliert werden muss, um einen Anschluss zu dem ersten Abschnitt der Trajektorie 31 bilden zu können.

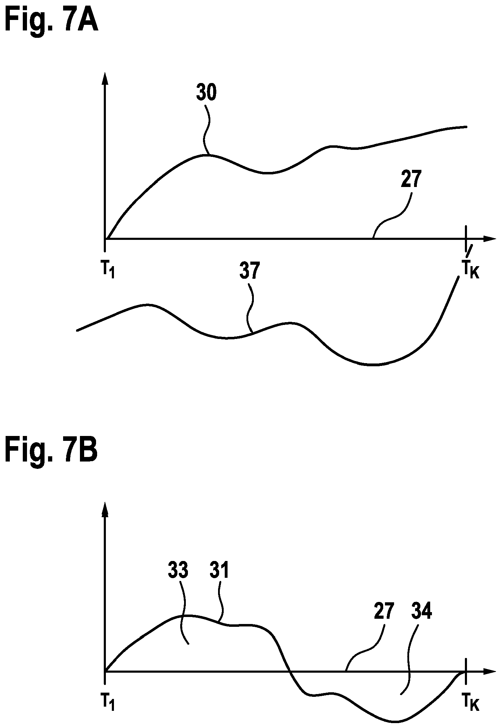

In Fig. 7 ist ein Ausführungsbeispiel gezeigt, bei dem zu der Wunsch-Leistungsprognose 30 eine Gegenkurve 37 gebildet wird, deren Form der Wunsch-Leistungsprognose 30 entspricht, siehe Fig. 7A. Die Gegenkurve 37 ist gegenüber der Wunsch-Leistungsprognose 30 an der Normal-Trajektorie 27 gespiegelt und verläuft in umgekehrter Richtung vom Zeitpunkt T_{K} zum Zeitpunkt T₁. Durch lineare Überlagerung der Wunsch-Leistungskurve 30 und der Gegenkurve 37 wird die in Fig. 7B gezeigte Trajektorie 31 gebildet, die ebenfalls den genannten Kriterien genügt. Die Menge an Überleistung 33 ist also genauso groß wie die Menge an Unterleistung 34, und zum Zeitpunkt T_{K} geht die Trajektorie 31 glatt in die Normal-Trajektorie 27 über.

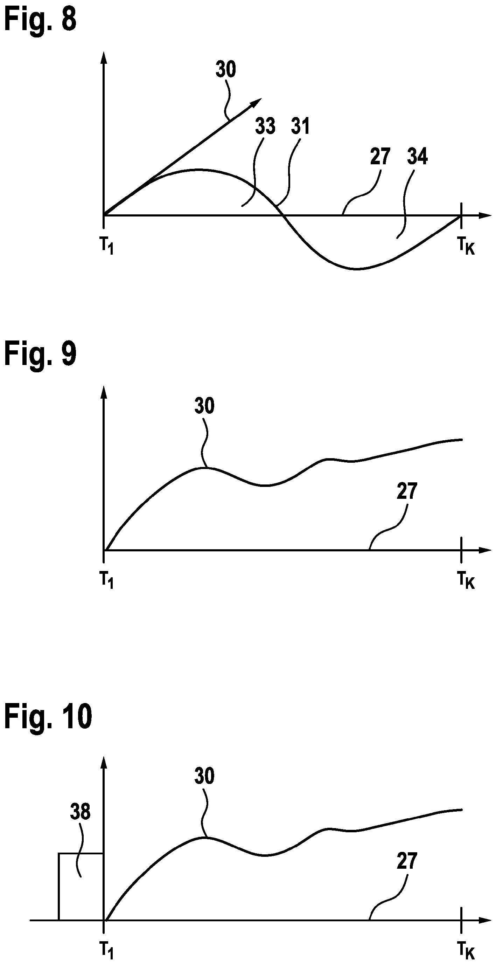

Bei der Ausführungsform gemäß Fig. 8 beschränkt sich die Wunsch-Leistungsprognose 30 auf die Information, dass die gewünschte Leistung zum Zeitpunkt T₁ mit einer bestimmten Steigung ansteigt. Die Trajektorie 31 nimmt diese Steigung zum Zeitpunkt T1 auf und entfernt sich nach einer ersten Phase des Anstiegs von dieser Steigung, um die Windenergieanlage innerhalb des Vorhersagezeitraums zurück zum Normalbetrieb zu führen. Auch die in Fig. 8 gezeigte Trajektorie 31 genügt den Vorgaben, dass die Überleistung 33 gleich der Unterleistung 34 ist und dass die Trajektorie 31 zum Zeitpunkt T_{K} glatt in die Normal-Trajektorie 27 übergeht.

In Fig. 9 sind lediglich die Wunsch-Leistungsprognose 30 und die Normal-Trajektorie 27 dargestellt. Die nicht dargestellte Trajektorie 31 wird als Optimierungsaufgabe unter Berücksichtigung der folgenden Randbedingungen ermittelt. Die Summe aus Überleistung und Unterleistung während des Vorhersagezeitraums ist null. Die Abweichung zwischen der Trajektorie 31 und der Normal-Trajektorie am Ende des Vorhersagezeitraums ist null. Die Abweichung zwischen der Trajektorie 31 und der Normal-Trajektorie 27 ist nicht größer als ein vorgegebener Schwellwert. Die Steigung der Trajektorie 31 ist zu keinem Zeitpunkt größer als ein vorgegebener zweiter Schwellwert. Die Abweichung zwischen der Trajektorie 31 und der Wunsch-Leistungsprognose 30 ist so gering wie möglich, wobei zu Beginn des Vorhersagezeitraums nur kleine Abweichungen zugelassen werden und mit zunehmender Dauer des Vorhersagezeitraums größere Abweichungen zugelassen werden. Beispielweise kann eine exponentielle Gewichtung vorgesehen sein, mit der zunehmend größere Abweichungen von der Wunsch-Leistungsprognose zugelassen werden. Die Lösung dieser Optimierungsaufgabe führt zu der gewünschten Trajektorie 31.

Bei den bisherigen Ausführungsbeispielen ist das Ermitteln der Trajektorie 31 unter der Annahme beschrieben worden, dass bis zum Beginn des Vorhersagezeitraums der tatsächliche Betrieb der Windenergieanlage der Normal-Trajektorie 27 entsprochen hat, dass also bis zum Beginn des Vorhersagezeitraums kein Überschuss/Defizit in der Leistungsabgabe aufgelaufen ist.

In Fig. 10 ist ein Beispiel dargestellt, bei dem die Windenergieanlage bis zum Zeitpunkt T1 einen Leistungsüberschuss 38 zur Verfügung gestellt hat, der in Fig. 10 als Rechteck dargestellt ist. Die Trajektorie 31 wird in einem solchen Fall so ermittelt, dass die Summe aus dem zu Beginn des Vorhersagezeitraums bestehenden Leistungsüberschuss/-defizit 38, der Überleistung 33 während des Vorhersagezeitraums und der Unterleistung 34 während des Vorhersagezeitraums sich bis zum Ende des Vorhersagezeitraums zu null addieren. Der Leistungsüberschuss/-defizit kann neben dem aerodynamischen und kinetischen Zustand der Windenergieanlage auch den Ladezustand des Umrichterzwischenkreises und/oder weiterer mit der Anlage gekoppelter elektrischer Kurzzeitspeicher berücksichtigen.

## Patentansprüche

1. Verfahren zum Betreiben einer Windenergieanlage, bei dem ein prädiktiver Regler (23) ausgehend von einem Systemzustand der Windenergieanlage eine Trajektorie (31) für die Leistungsabgabe der Windenergieanlage für einen Vorhersagezeitraum berechnet und bei dem die Leistungsabgabe der Windenergieanlage auf Basis eines Trajektoriewerts (35) eingestellt wird,
a. wobei die Trajektorie (31) einen Abschnitt umfasst, in dem die Trajektoriewerte (35) einer Überleistung (33) gegenüber Normalleistung entsprechen, und einen Abschnitt umfasst, in dem die Trajektoriewerte (35) einer Unterleistung (34) gegenüber Normalleistung entsprechen, **dadurch gekennzeichnet, dass** die Überleistung (33) und die Unterleistung (34) sich bis zum Ende (T_{K}) des Vorhersagezeitraums zu Null addieren,
oder
b. wobei die Trajektorie (31) einen Abschnitt umfasst, in dem die Trajektoriewerte (35) einer Überleistung (33) gegenüber Normalleistung entsprechen, und/oder einen Abschnitt umfasst, in dem die Trajektoriewerte (35) einer Unterleistung (34) gegenüber Normalleistung entsprechen, **dadurch gekennzeichnet, dass** die Überleistung (33) und
die Unterleistung (34) sich bis zum Ende (T_{K}) des Vorhersagezeitraums zu Null addieren, wobei bei der Addition von Überleistung (33) und Unterleistung (34) ein bis zum Beginn des Vorhersagezeitraums aufgelaufener Leistungsüberschuss/-defizit berücksichtigt wird.

2. Verfahren nach Anspruch 1, **dadurch gekennzeichnet, dass** eine Prognose über die Normalleistung während des Vorhersagezeitraums erstellt wird.

3. Verfahren nach Anspruch 1 oder 2, **dadurch gekennzeichnet, dass** die Normalleistung aus einer Normal-Trajektorie (27) abgeleitet wird, wobei die Normal-Trajektorie (27) unter der Annahme berechnet wird, dass während des Vorhersagezeitraums Normalleistung bereitgestellt wird.

4. Verfahren nach einem der Ansprüche 1 bis 3, **dadurch gekennzeichnet, dass** die Trajektorie (31) einen ersten Abschnitt umfasst, in dem durch die Abweichung von der Normalleistung einer Abweichung der Netzfrequenz entgegengewirkt wird.

5. Verfahren nach Anspruch 4, **dadurch gekennzeichnet, dass** die Trajektorie (31) einen zweiten Abschnitt umfasst, in dem eine in dem ersten Abschnitt aufgebaute Abweichung von der Normalleistung ausgeglichen wird.

6. Verfahren nach einem der Ansprüche 1 bis 5, **dadurch gekennzeichnet, dass** die Trajektorie (31) aus einer Wunsch-Leistungsprognose (30) abgeleitet wird.

7. Verfahren nach einem der Ansprüche 1 bis 6, **dadurch gekennzeichnet, dass** bei der Addition von Überleistung (33) und Unterleistung (34) eine Minderleistung berücksichtigt wird, die sich aus dem aerodynamisch ineffizienteren Betrieb bei Abweichung von der Normal-Trajektorie (27) ergibt.

8. Verfahren nach einem der Ansprüche 1 bis 7, **dadurch gekennzeichnet, dass** die Trajektorie (31) am Ende (T_{K}) des Vorhersagezeitraums mit der Normal-Trajektorie (27) übereinstimmt.

9. Verfahren nach einem der Ansprüche 1 bis 8, **dadurch gekennzeichnet, dass** bei der Ermittlung der Trajektorie (31) eine Prognose über das Verhalten eines Umrichters berücksichtigt wird.

10. Verfahren nach Anspruch 9, **dadurch gekennzeichnet, dass** die Trajektorie (31) unter Berücksichtigung einer Zwischenkreisspannung des Umrichters berechnet wird.

11. Steuerung für eine Windenergieanlage, mit einem prädiktiven Regler (23), der ausgehend von einem Systemzustand der Windenergieanlage eine Trajektorie (27) für eine Stellgröße der Windenergieanlage für einen Vorhersagezeitraum berechnet, wobei die Steuerung dazu ausgelegt ist, ein Steuersignal (26) zu erzeugen, um die Stellgröße der Windenergieanlage auf Basis eines Trajektoriewerts (35) einzustellen,
a. wobei die Trajektorie (31) einen Abschnitt umfasst, in dem die Trajektoriewerte (35) einer Überleistung (33) gegenüber Normalleistung entsprechen, und einen Abschnitt umfasst, in dem die Trajektoriewerte (35) einer Unterleistung (34) gegenüber Normalleistung entsprechen, **dadurch gekennzeichnet, dass** die Überleistung (33) und die Unterleistung (34) sich bis zum Ende (T_{K}) des Vorhersagezeitraums zu Null addieren,
oder
b. wobei die Trajektorie (31) einen Abschnitt umfasst, in dem die Trajektoriewerte (35) einer Überleistung (33) gegenüber Normalleistung entsprechen, und/oder einen Abschnitt umfasst, in dem die Trajektoriewerte (35) einer Unterleistung (34) gegenüber Normalleistung entsprechen, **dadurch gekennzeichnet, dass**
die Überleistung (33) und die Unterleistung (34) sich bis zum Ende (T_{K}) des Vorhersagezeitraums zu Null addieren, wobei bei der Addition von Überleistung (33) und Unterleistung (34) ein bis zum Beginn des Vorhersagezeitraums aufgelaufener Leistungsüberschuss/-defizit berücksichtigt wird.

## Claims

1. Method for operating a wind turbine, in which a predictive controller (23) uses a system state of the wind turbine as a basis for calculating a trajectory (31) for the power output of the wind turbine for a forecast period and in which the power output of the wind turbine is adjusted on the basis of a trajectory value (35),
a. wherein the trajectory (31) comprises a section in which the trajectory values (35) correspond to an overpower (33) relative to normal power, and comprises a section in which the trajectory values (35) correspond to an underpower (34) relative to normal power, **characterized in that** the overpower (33) and the underpower (34) add up to zero by the end (T_{K}) of the forecast period,
or
b. wherein the trajectory (31) comprises a section in which the trajectory values (35) correspond to an overpower (33) relative to normal power, and/or comprises a section in which the trajectory values (35) correspond to an underpower (34) relative to normal power, **characterized in that** the overpower (33) and the underpower (34) add up to zero by the end (T_{K}) of the forecast period, wherein a power surplus/deficit accrued up to the beginning of the forecast period is taken into account when overpower (33) and underpower (34) are being added up.

2. Method according to Claim 1, **characterized in that** a prediction about the normal power is made during the forecast period.

3. Method according to Claim 1 or 2, **characterized in that** the normal power is derived from a normal trajectory (27), wherein the normal trajectory (27) is calculated under the assumption that normal power is provided during the forecast period.

4. Method according to one of Claims 1 to 3, **characterized in that** the trajectory (31) comprises a first section in which a deviation of the mains frequency is counteracted by the deviation from the normal power.

5. Method according to Claim 4, **characterized in that** the trajectory (31) comprises a second section in which a deviation from the normal power built up in the first section is compensated for.

6. Method according to one of Claims 1 to 5, **characterized in that** the trajectory (31) is derived from a desired power prediction (30).

7. Method according to one of Claims 1 to 6, **characterized in that** a reduced power resulting from the aerodynamically less efficient operation when deviating from the normal trajectory (27) is taken into account when overpower (33) and underpower (34) are being added up.

8. Method according to one of Claims 1 to 7, **characterized in that** the trajectory (31) at the end (T_{K}) of the forecast period corresponds to the normal trajectory (27).

9. Method according to one of Claims 1 to 8, **characterized in that** a prediction about the behaviour of a converter is taken into account when the trajectory (31) is being determined.

10. Method according to Claim 9, **characterized in that** the trajectory (31) is calculated taking into account a DC link voltage of the converter.

11. Control system for a wind turbine, having a predictive controller (23) which uses a system state of the wind turbine as a basis for calculating a trajectory (27) for a manipulated variable of the wind turbine for a forecast period, wherein the control system is designed to generate a control signal (26) in order to adjust the manipulated variable of the wind turbine on the basis of a trajectory value (35),
a. wherein the trajectory (31) comprises a section in which the trajectory values (35) correspond to an overpower (33) relative to normal power, and comprises a section in which the trajectory values (35) correspond to an underpower (34) relative to normal power, **characterized in that** the overpower (33) and the underpower (34) add up to zero by the end (T_{K}) of the forecast period,
or
b. wherein the trajectory (31) comprises a section in which the trajectory values (35) correspond to an overpower (33) relative to normal power, and/or comprises a section in which the trajectory values (35) correspond to an underpower (34) relative to normal power, **characterized in that** the overpower (33) and the underpower (34) add up to zero by the end (T_{K}) of the forecast period, wherein a power surplus/deficit accrued up to the beginning of the forecast period is taken into account when overpower (33) and underpower (34) are being added up.

## Revendications

1. Procédé pour faire fonctionner un aérogénérateur, avec lequel un régulateur prédictif (23) calcule, à partir d'un état de système de l'aérogénérateur, une trajectoire (31) pour la puissance de sortie de l'aérogénérateur pendant une période de prévision et avec lequel la puissance de sortie de l'aérogénérateur est réglée sur la base d'une valeur de trajectoire (35),
a. la trajectoire (31) comportant une portion dans laquelle les valeurs de trajectoire (35) correspondent à une puissance excédentaire (33) par rapport à la puissance normale, et comportant une portion dans laquelle les valeurs de trajectoire (35) correspondent à une puissance insuffisante (34) par rapport à la puissance normale, **caractérisé en ce que** la puissance excédentaire (33) et la puissance insuffisante (34) s'additionnent à zéro jusqu'à la fin (T_{K}) de la période de prévision,
ou
b. la trajectoire (31) comportant une portion dans laquelle les valeurs de trajectoire (35) correspondent à une puissance excédentaire (33) par rapport à la puissance normale, et/ou comportant une portion dans laquelle les valeurs de trajectoire (35) correspondent à une puissance insuffisante (34) par rapport à la puissance normale, **caractérisé en ce que** la puissance excédentaire(33) et la puissance insuffisante (34) s'additionnent à zéro jusqu'à la fin (T_{K}) de la période de prévision, un excédent/déficit de puissance accumulé jusqu'au début de la période de prévision étant pris en compte lors de l'addition de la puissance excédentaire (33) et de la puissance insuffisante (34).

2. Procédé selon la revendication 1, **caractérisé en ce qu'**un pronostic de la puissance normale est établi pendant la période de prévision.

3. Procédé selon la revendication 1 ou 2, **caractérisé en ce que** la puissance normale est dérivée d'une trajectoire normale (27), la trajectoire normale (27) étant calculée en supposant que la puissance normale est fournie pendant la période de prévision.

4. Procédé selon l'une des revendications 1 à 3, **caractérisé en ce que** la trajectoire (31) comprend une première portion dans laquelle un écart de la fréquence du réseau est contré par l'écart par rapport à la puissance normale.

5. Procédé selon la revendication 4, **caractérisé en ce que** la trajectoire (31) comprend une deuxième portion dans laquelle un écart par rapport à la puissance normale, accumulé dans la première portion, est compensé.

6. Procédé selon l'une des revendications 1 à 5, **caractérisé en ce que** la trajectoire (31) est dérivée d'un pronostic de puissance souhaitée (30).

7. Procédé selon l'une des revendications 1 à 6, **caractérisé en ce que**, lors de l'addition de la puissance excessive (33) et de la puissance insuffisante (34), il est tenu compte d'une puissance réduite qui résulte du fonctionnement aérodynamiquement plus inefficace lors d'un écart par rapport à la trajectoire normale (27).

8. Procédé selon l'une des revendications 1 à 7, **caractérisé en ce que** la trajectoire (31) à la fin (T_{K}) de la période de prévision coïncide avec la trajectoire normale (27).

9. Procédé selon l'une des revendications 1 à 8, **caractérisé en ce que**, lors de la détermination de la trajectoire (31), il est tenu compte d'un pronostic concernant le comportement d'un convertisseur.

10. Procédé selon la revendication 9, **caractérisé en ce que** la trajectoire (31) est calculée en tenant compte d'une tension de circuit intermédiaire du convertisseur.

11. Commande pour un aérogénérateur, comprenant un régulateur prédictif (23) qui, à partir d'un état de système de l'aérogénérateur, calcule une trajectoire (27) pour une grandeur de réglage de l'aérogénérateur pour une période de prévision, la commande étant conçue pour générer un signal de commande (26) afin d'ajuster la grandeur de réglage de l'aérogénérateur sur la base d'une valeur de trajectoire (35),
a. la trajectoire (31) comportant une portion dans laquelle les valeurs de trajectoire (35) correspondent à une puissance excédentaire (33) par rapport à la puissance normale, et comportant une portion dans laquelle les valeurs de trajectoire (35) correspondent à une puissance insuffisante (34) par rapport à la puissance normale, **caractérisé en ce que** la puissance excédentaire (33) et la puissance insuffisante (34) s'additionnent à zéro jusqu'à la fin (T_{K}) de la période de prévision,
ou
b. la trajectoire (31) comportant une portion dans laquelle les valeurs de trajectoire (35) correspondent à une puissance excédentaire (33) par rapport à la puissance normale, et/ou comportant une portion dans laquelle les valeurs de trajectoire (35) correspondent à une puissance insuffisante (34) par rapport à la puissance normale, **caractérisé en ce que** la puissance excédentaire(33) et la puissance insuffisante (34) s'additionnent à zéro jusqu'à la fin (T_{K}) de la période de prévision, un excédent/déficit de puissance accumulé jusqu'au début de la période de prévision étant pris en compte lors de l'addition de la puissance excédentaire (33) et de la puissance insuffisante (34).
